# EUROPEAN PATENT APPLICATION

(11) **EP 1 338 211 A1**
(43) Date of publication of application: **27.08.2003**
(21) Application number: 03380038.4
(22) Date of filing: 21.02.2003
(51) Int. Cl.: A23L 2/38, A23L 1/30, A23L 2/02

(54) **A stimulating drink**

(30) Priority: 22.02.2002 ES 200200433
(71) Applicant: Sator & Fata, S.L., 17190 Salt (Girona) (ES)
(72) Inventor: Suárez Crespo, Juán José, 17190 Salt, Girona (ES)
(74) Representative: Matamoron Hernandez, José Pedro

(57) **Abstract**

This drink contains hydric extract of Ilex paraguayensis (maté) between 1.25 and 1.75%, lemon juice between 12 and 20%, colouring between 15 and 22%, antioxidant between 0.1 and 0.5%, sweetener between 0.1 and 0.5%, flavouring additives between 0 and 0.5% and water to make up the remaining percentage to 100%.

## Description

### AIM OF THE INVENTION

The present invention refers, as its title states, to a stimulating drink of the type drunk in order to reduce the consumer's feeling of fatigue or tiredness.

### BACKGROUND OF THE INVENTION

At the present time, there are different types of stimulating drinks on the market, in a generalised way, their composition include caffeine. It is this component that provides the consumer with a certain degree of euphoria and thus reducing the feeling of drowsiness and fatigue.

However, the use of caffeine in this type of stimulating drink poses certain disadvantages, especially in the event of the consumption of large amounts, agitated palpitations or insomnia being the ones that stand out.

### DESCRIPTION OF THE INVENTION

The stimulating drink that is the aim of this invention has a composition aimed at reducing the consumer's tiredness and fatigue, likewise reducing the feeling of hunger and thirst, eliminating the disadvantages posed by the use of caffeine in these types of drinks.

In accordance with the invention, this drink contains a hydric extract of Ilex paraguayensis (maté), water, lemon juice, colouring, antioxidant, sweetener and optionally flavouring additives.

The stimulating effect of this drink is determined specifically from the inclusion in its composition of said hydric extract of Ilex paraguayensis (maté) since the main ingredient of this component is methylxantine that has the same properties as caffeine, but does not have the above-mentioned disadvantages, such as agitated palpitations or insomnia.

This stimulating drink gives the consumer an increase in the power of concentration, likewise a raised level of resistance to physical effort and stress. It also stimulates digestion and helps the absorption of foods at the same time giving vitality to the organism and acting as a diuretic.

As a food supplement, it provides the body with vitamin C in large amounts, the vitamins B1, B2, B3 and B6, niagine, proteins, glucose, sucrose, sodium, potassium, magnesium, calcium, iron, phosphorus and lithium.

In accordance with the invention, the percentages by volume of the different components of the stimulating drink aim of this invention are: a hydric extract of Ilex paraguayensis between 1.25 and 1.75%, lemon juice between 12 and 20%, colouring between 15 and 22%, antioxidant between 0.1 and 0.5%, sweetener between 0.1 and 0.5%, flavouring additives between 0 and 0.5% and water to make up the remaining percentage to 100%.

In accordance with the invention, it has been envisaged that the stated antioxidant is made up of ascorbic acid, the colouring by liquid caramel and the sweetener by either glucose or equally sucrose.

In the event of the drink containing flavour additives, these will be those that are normally used within the food industry, being able to give the drink a flavour of cinnamon, vanilla, mint or any other that is considered suitable, as this would not mean any variation of the invention.

### PREFERRED EMBODIMENT OF THE INVENTION

In a preferred embodiment of the invention, the stimulating drink object of this invention would be available in 33 centilitre containers, including in this volume the amounts as stated below: 0.50 centilitres of a hydric extract of Ilex paraguayensis (maté), 20 centilitres of water, 5 centilitres of lemon juice, 7 centilitres of liquid caramel, 0.20 centilitres of ascorbic acid and 0.30 centilitres of glucose.

Once having sufficiently described the nature of the invention, likewise an example of the preferred embodiment, it is placed on record to whom it may concern that the components and amounts stated can be altered, provided that this does not mean an alteration of the essential nature of the invention that is claimed below.

## Claims

1. A stimulating drink, **characterised in that** it contains the following components: a hydric extract of Ilex paraguayensis (maté), water, lemon juice, colouring, antioxidant, sweetener and optionally flavouring additives.

2. A stimulating drink, according to the previous claim, **characterised in that** the percentages by volume of the different components are: a hydric extract of Ilex paraguayensis between 1.25 and 1.75%, lemon juice between 12 and 20%, colouring between 15 and 22%, antioxidant between 0.1 and 0.5%, sweetener between 0.1 and 0.5%, flavouring additives between 0 and 0.5% and water to make up the remaining percentage to 100%.

3. A stimulating drink according to claims 1 and 2, **characterised in that** the antioxidant is made up from ascorbic acid.

4. A stimulating drink according to claims 1 and 2, **characterised in that** the colouring is made up from liquid caramel.

5. A stimulating drink according to claims 1 and 2, **characterised in that** the sweetener is made up from glucose or sucrose.
